# EUROPEAN PATENT SPECIFICATION

(11) **EP 3 173 361 B1**
(45) Date of publication and mention of the grant of the patent: **23.03.2022**
(21) Application number: 16198648.4
(22) Date of filing: 14.11.2016
(51) Int. Cl.: B65G 25/02, B67C 3/24, B67C 7/00

(54) **TRANSPORT SYSTEM FOR PACKAGING MACHINES**
TRANSPORTSYSTEM FÜR VERPACKUNGSMASCHINEN
SYSTÈME DE TRANSPORT POUR MACHINES D'EMBALLAGE

(30) Priority: 26.11.2015 ES 201500879
(43) Date of publication of application: 31.05.2017
(73) Proprietor: Germade Castiñeiras, Pablo, 36162 Pontevedra (ES)
(72) Inventor: Germade Castiñeiras, Pablo, 36162 Pontevedra (ES)
(74) Representative: Ungria López, Javier

(56) References cited:
- WO-A1-2009/103401
- CA-A1- 2 854 962
- GB-A- 2 197 633

## Description

### Object of the invention

The invention described herein falls within the fields of: food, pharmaceutical, cosmetics and chemistry, as well as any other type of field where the packaging is based on preformed containers.

### Technical problem to address and background of the invention

Currently, most of the developments related to packaging machinery are focused on improving rotating machinery and step-by-step chain conveying machinery. Few developments have been aimed at new transport systems. This leads to inventions focused on increasing work stations or increasing the speed of the machine. As a result of this, if the production capacity is higher, the size of the machine increases substantially in the first case, and the reliability or the hours of life are reduced in the other.

They are some new transport systems that are being developed, even those not intended for being use for packaging but for carrying, that have a fixed assembly and mobile assemblies like the described on the patent GB 2 197 633 A. This development consists of a plurality of carriage driven forward along a fixed path, where each carriage has a telescopic unit for vertical positioning of the conveyor surface and a rotate unit on the horizontal-longitudinal axis for its inclination. The fixed path is closed loop where the carriages only go forward.

GB 2 197 633 A discloses a system comprising features falling under the wording of the preamble of claim 1.

Other example of transport system is the described on the patent WO 2009 103 401 A1. This development consists also of a plurality of carriages driven forward along a fixed conveyor, also as a closed loop. This development introduces not only one rotate assembly, but two. One is used to change the position of the element carried and the other to reduce space on the way back without element carried. Any of them have the main purpose of avoiding collision with the other mobile assemblies.

### Description of the invention

Given the situation of the background of the invention described, a technical problem arises in terms of innovation and development of new transport systems for packaging machinery which are actually feasible in practice.

The present invention refers to a transport system for packaging machines according to claim 1

intended mainly to process preformed containers made of plastic, cardboard, glass, ceramic or any other material.

The transport system for packaging machines belongs to the linear type, in which the containers enter the machine through an empty containers feeding point, they are transported in longitudinal direction, and exit through an opposite point. The transport of containers is carried out in such a way that the transport elements are oriented transversally to the machine when carrying the containers, the orientation of the transport elements changes when they are being moved to the feeding point of empty containers, returning to the transversal orientation when they are to be supplied with containers again. The transport system for packaging machines comprises a fixed assembly and a plurality of mobile assemblies that move along said fixed assembly.

The fixed assembly in turn comprises horizontal guiding sub-assemblies of the mobile assemblies and a base.

According to the invention, each mobile assembly in turn comprises
- a telescopic sub-assembly that moves on its related guiding sub-assembly for horizontal guiding, each telescopic sub-assembly is in charge of moving up or down the related rotating sub-assembly, and
- a rotating sub-assembly that rotates on its telescopic sub-assembly and that is configured to transport the containers onto itself.

The number of mobile assemblies depends on the configuration of the machine, which in turn depends on the type and size of container for which it is designed and on the product to be packaged, besides any possible accessory of the product.

According to the invention, the fixed assembly comprises
- a base;
- a plurality of horizontal guiding sub-assemblies of the mobile assemblies.

Each rotating sub-assembly of the transport system for packaging machines comprises housings for the containers, and can also comprise a gripper system configured to fasten the containers.

As already stated, the fixed assembly comprises a horizontal guiding sub-assembly for each telescopic sub-assembly provided in the machine, installed on the base of the system.

The horizontal guiding sub-assembly comprises a set of guides for the horizontal movement of the mobile assemblies, an actuator that moves said horizontal guiding sub-assembly over the guides and a support for the set of guides for the horizontal movement. This actuator may be an electric or pneumatic servomotor that moves a screw shaft, a pulley-belt assembly or a rack-pinion assembly of the fixed assembly, thus moving the mobile assemblies.

The telescopic sub-assemblies in turn comprise:
- a fixed vertical sub-assembly, where sliders which moves along the guides of the related fixed horizontal guiding sub-assembly are installed on, and
- a mobile vertical sub-assembly in charge of moving up or moving down the corresponding rotating sub-assembly.

The fixed vertical sub-assembly of the telescopic sub-assemblies comprises:
- a base plate,
- sliders for the movement in horizontal movement,
- a set of guides along which the movements of the mobile vertical sub-assembly is carried out and
- a linear actuator, be it electric or pneumatic, the linear actuator in charge of extending the telescopic sub-assembly in vertical.

The mobile vertical sub-assembly comprises:
- a base plate,
- sliders for vertical movement of the rotating sub-assembly,
- a rotation shaft of the rotating sub-assembly in the upper part.

The sliders for the horizontal movement of the mobile assemblies move along the guides for the horizontal movement of a horizontal guiding fixed sub-assembly and along a mobile vertical sub-assembly in charge of moving up and moving down the related rotating sub-assembly.

The rotating sub-assemblies comprise
- a pivoting support where the rotation shaft installed of the related telescopic sub-assembly, is housed,
- a support where the housings for the containers or grippers are installed, as the case may be,
- at least one actuator in charge of the rotation movement with respect to the telescopic sub-assembly.

The rotating sub-assemblies may also comprise plurality of light indicators that indicate the progress of each of the packaging process for each container. "Progress of the packaging process" is understood as the appearance of defects, or lack thereof, in each of the auxiliary work stations. It is worth noting that the fastening of the container during transport may be simply the housing of the container or a housing with a gripper system or similar, to hold it during all the operations carried out by the supply and placement work stations.

The transport system for packaging machines is featured by the feature that the movement of the containers during the packaging process is non-continuous and in the longitudinal direction of the machine, the rotating sub-assemblies being oriented in transversal direction and upper position during this movement.

Once the containers are removed upon the exit of the machine, the rotating sub-assemblies are re-oriented according to the longitudinal direction of the machine and are placed in lowered position to move to the feeding point of empty containers. Once this point is reached, the rotating sub-assemblies are again re-oriented according to the transversal direction and to an upper position to begin a new movement.

Another feature of the transport system is the possibility of installing light indicators in the housing of each container of the mobile assemblies, such that the progress of the packaging process for each of the containers may be easily and clearly indicated. This allows the machine's operators to follow-up defective products better.

The transport system for packaging machines system is also featured by the reduced number of components that have to be changed for a format changing operation. In the event that the containers are housed in grippers, it is not necessary to change anything in the mobile assemblies, since operation thereof remains the same. It would only be necessary if the grippers were not designed to be as closed as required by formats of other sizes. Should the containers be housed in simple housings, without further gripping than the walls of the housing, it would be necessary to change the assemblies where they are mounted. This would only require changing one element per each mobile assembly. The only necessary changes in format would be those related to auxiliary work stations.

It is object of the invention the procedure of the movement of the mobile assemblies of the transport system for packaging machines, the mobile assemblies comprising a rotating sub-assembly and a telescopic sub-assembly according to claim 10.

The procedure of movement of the mobile assemblies comprises the following stages:
- during transport of containers between an empty container feeding position (A position) and a removing containers position (D position), each mobile assembly (2) moves forward along its corresponding horizontal guiding fixed sub-assembly in a non-continuous manner stopping on each work station; during this movement the rotating sub-assembly (2.2) moves in the transversal position to the transport system and the related telescopic sub-assembly is located in its upper position;
- once the containers are removed from the related rotating sub-assembly, the rotating sub-assembly is re-oriented in longitudinal position to the transport system, and the related telescopic sub-assembly is located in its lower position;
- the movement backward of the mobile assembly from a removing containers position (D position) to an empty container feeding position (A position) is performed along its corresponding horizontal guiding fixed sub-assemblies without colliding with the others;
- once the mobile assembly reaches the feeding point of empty containers, the rotating sub-assembly is re-oriented again to the transversal position, and the related telescopic sub-assembly, in its upper position to initiate the procedure again.

### Description of the drawings

Figure 1: Perspective view of the transport systems for packaging machines.

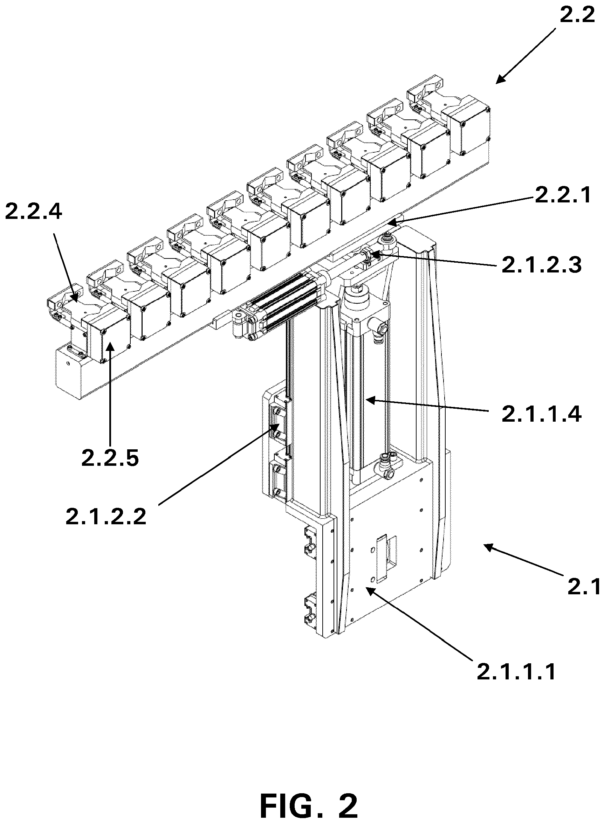

Figure 2: Perspective view of a mobile assembly, being the sub-assemblies positioned to be transported from the work station for removing filled containers to the work station for feeding empty containers.

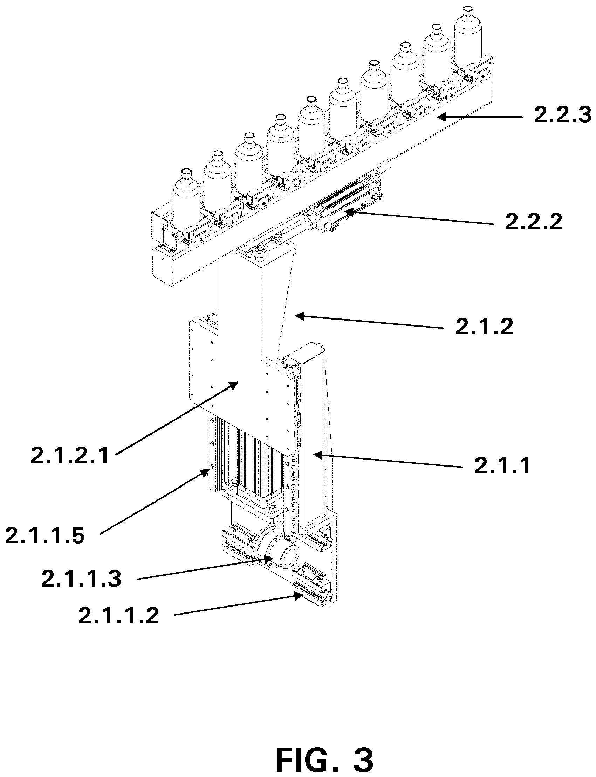

Figure 3: Perspective view of a mobile assembly, the sub-assemblies of which are positioned for the transport of containers.

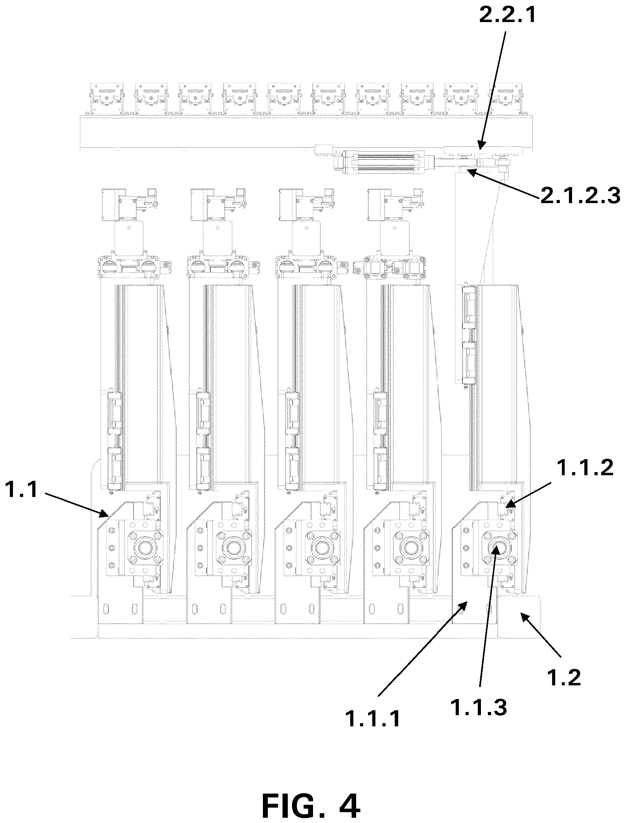

Figure 4: Profile view of the transport system for packaging machines such that only one of the mobile assemblies is located in the containers transport mode, and the rest are positioned in the position for transporting them to the feeding work station of empty containers.

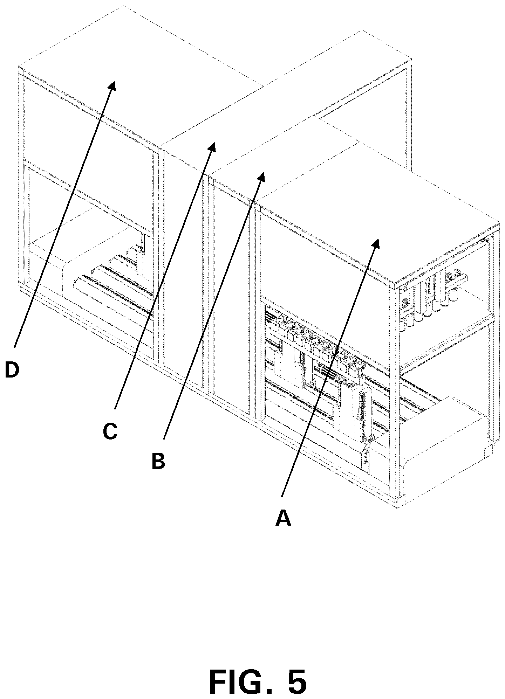

Figure 5: Perspective view of a complete machine. It is composed of a transport system for packaging machines, an auxiliary feeding work station, an auxiliary work station for supplying the product, an auxiliary work station for supplying product accessories, and an auxiliary work station for removing filled containers.

### Preferred embodiment of the invention

The embodiment of the invention described below applies to filling glass bottles.

This embodiment uses pneumatic technology for the rotating movements of the rotating sub-assemblies (2.2) and for conducting upward and downward movement of said rotating sub-assemblies (2.2). To move the mobile assemblies (2) in longitudinal movement, ball screw-shaft assemblies are used. The gripping of the bottles is carried out by the grippers (2.2.4) actuated by means of pneumatic cylinders.

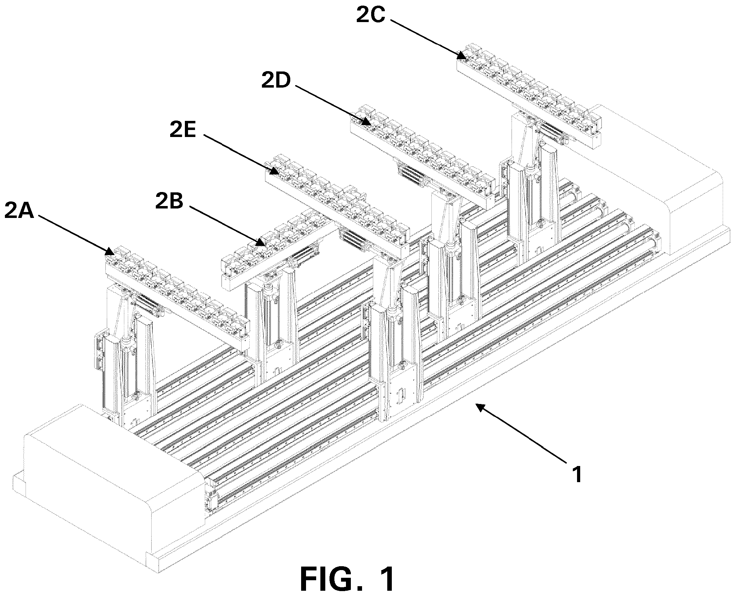

The transport system for packaging machines comprises:
- A fixed assembly (1) which in turn comprises the following sub-assemblies:
   - Fixed horizontal guiding sub -assemblies for (1.1) in turn comprising:
      - Support for the guides for the horizontal displacement (1.1.1);
      - Guides of the horizontal movement of the mobile assemblies (1.1.2);
      - Screw shaft (1.1.3) in charge of displacing the nut located in the mobile assembly.
   - A base (1.2)
- Five mobile assemblies (2) (on the figure 1 showed as: 2A, 2B, 2C, 2D, 2E) which turn comprise of the following sub-assemblies:
   - A telescopic sub-assembly (2.1) in turn comprising:
      - A fixed vertical sub-assembly (2.1.1), comprising:
         - Base plate of the fixed telescopic sub-assembly (2.1.1.1);
         - Sliders for the horizontal movement of the mobile assemblies (2.1.1.2);
         - Nut (2.1.1.3) for the horizontal movement of the mobile assemblies (2);
         - Linear pneumatic actuator in charge of extending the telescopic sub-assembly vertically (2.1.1.4);
         - Guides (2.1.1.5) for the vertical extension of the telescopic sub-assembly (2.1);
      - A mobile vertical sub-assembly (2.1.2) in turn comprising:
         - Base plate of the mobile telescopic sub-assembly (2.1.2.1);
         - Sliders for the vertical movement of the rotating sub-assembly (2.1.2.2);
         - Pivoting shaft of the rotating sub-assembly on the telescopic sub-assembly (2.1.2.3);
   - A rotating sub-assembly (2.2) comprising:
      - Pivoting support (2.2.1);
      - Linear pneumatic actuators in charge of rotating the rotating sub-assembly relative to the telescopic sub-assembly (2.2.2);
      - Gripper support (2.2.3);
      - Grippers (2.2.4);
      - Light indicators (2.2.5) of the status of the container throughout its movement through the machine (2.2.5);

To constitute a complete packaging machine, the system also comprises a plurality of auxiliary fixed work stations: one work station for supplying empty containers and another work stations for removing filled containers. It also comprises different auxiliary work stations in charge of supplying and placing/filling the product in the containers, and in charge of supplying and placing accessories of the product. The number of said types of auxiliary work stations depends on the final configuration of the packaging machine.

The auxiliary work stations of the transport system of the invention are:
- work station for feeding empty containers (A);
- work stations for supplying and placing/filling the product (B);
- work stations for supplying and placing accessories of the product (C);
- work station for removing filled containers (D).

The work station for feeding empty containers (A) comprises:
- A base where the containers await to be carried to the related rotating sub-assembly,
- A system, Cartesian or not, in charge of carrying the containers, and,
- Grippers or heads with vents, in charge of fastening the containers during carrying.

The base where the container awaits to be transported may comprise elements to control the weight of the empty container.

The work station for supplying and placing/filling the product (B) and the work stations for supplying and placing accessories of the product (C) comprise a fixed part that is located partly on the base of the machine and partly on a side thereof, being oriented in transversal direction to the base. The set for placing the product and the accessories is installed on the related fixed part and on the base of the machine. The set for supplying the product and the accessories comprises elements that will be both on the base of the machine and on the side of the machine.

The work station for removing filled containers (D) comprises:
- a base where it places the containers removed from the rotating sub-assemblies,
- a system, Cartesian or not, in charge of transporting the containers, and
- grippers or heads with vents, in charge of fastening the containers during transport.

The base where the work station for removing filled containers (D) places the containers removed from the rotating sub-assemblies (2.2) may comprise elements to control the weight of the filled or filled-and-closed container.

The rotating sub-assembly (2.2) can comprise housings for receiving the containers, when they are received in the machine. The light indicators (2.2.5) of the rotating sub-assembly (2.2) can be located into the housing of each container, such that the progress of the packaging process for each of the containers may be easily and clearly indicated. This allows the machine's operators to follow-up defective products better.

With this morphology of the transport system for packaging machines, the operation is as follows:
Beginning or position zero:
   - All the rotating sub-assemblies (2.2) are located in a position longitudinal with respect to the machine and in lowered position, and all the telescopic sub-assemblies (2.1) are located in its reference position.
First movement:
   - The first telescopic sub-assembly (2.1) moves to an empty container feeding position (A1 position), the related rotating sub-assembly (2.2) remaining in longitudinal position.
Second movement:
   - Once the first telescopic sub-assembly is in its empty container feeding position (A1 position), the first telescopic sub-assembly (2.1) moves up the first rotating sub-assembly (2.2) and said first rotating sub-assembly (2.2) rotates on the first telescopic sub-assembly (2.1) to be positioned transversally to the machine. At this point, this first rotating sub-assembly (2.2) is fed with empty containers and the grippers (2.2.4) close, thus preventing said containers from potential movement;
   - A second telescopic sub-assembly (2.1) moves below the first telescopic sub-assembly (2.1) until said second telescopic sub-assembly (2.1) reaches its empty container feeding position (A2 position).
Third movement:
   - The first telescopic sub-assembly (2.1) moves to a position for receiving the product (B position), where the empty containers are filled by the work station for supplying and placing/filling the product (B) and stops in said position until the work station for supplying and placing/filling product (B) concludes its task;
   - Once the second telescopic sub-assembly (2.1) is in the empty container feeding position (A2 position), said second telescopic sub-assembly (2.1) moves up the second rotating sub-assembly (2.2) while said second rotating sub-assembly (2.2) rotates to be positioned transversally to the machine. At this point, the second rotating sub-assembly (2.2) is fed with empty containers and the grippers (2.2.4) close, thus preventing said containers from potential movement;
   - The third telescopic sub-assembly (2.1) moves below the first and second telescopic sub-assemblies (2.1) until the third telescopic sub-assembly (2.1) reaches the empty containers feeding position (A3 position).
Fourth movement:
   - Once the work station for supplying and placing/filling product (B) has concluded its task, the first telescopic sub-assembly (2.1) moves to a position for receiving accessories (C1 position), and stops there until the work station for supplying and placing accessories of the product (C) concludes its task;
   - Once the second telescopic sub-assembly (2.1) has received the containers, said second telescopic sub-assembly (2.1) moves to the position for receiving the product (B position) and stops there until the work station for supplying and placing/filling the product (B) concludes its task;
   - Once the second telescopic sub-assembly (2.1) is in the position for receiving the product (B position), the third telescopic sub-assembly (2.1) moves up the third rotating sub-assembly (2.2) while said third rotating sub-assembly (2.2) rotates to be positioned transversally to the machine. At this position, the third rotating sub-assembly (2.2) is fed with empty containers and the grippers (2.2.4) close, thus preventing said containers from potential movement;
   - The fourth telescopic sub-assembly (2.1) moves below the first, second and third telescopic sub-assemblies (2.1) until the fourth telescopic sub-assembly (2.1) reaches the empty containers feeding position (A4 position).
Fifth movement:
   - Once the work station for supplying and placing accessories of the product (C) has concluded its task on the containers of the first telescopic sub-assembly (2.1), said first telescopic sub-assembly (2.1) moves to a container evacuation position (D1 position). Once the evacuation of containers is concluded, the first rotating sub-assembly (2.2) is positioned longitudinally to the machine and in its lowered position.
   - Once the work station for supplying and placing/filling the product (B) has filled the containers of the second telescopic sub-assembly (2.1), the second telescopic sub-assembly (2.1) moves to the position for receiving accessories (C position), and stops there until the work station for supplying and placing accessories of the product (C) concludes its task.
   - Once the third telescopic sub-assembly (2.1) has received the containers, said third telescopic sub-assembly (2.1) moves to the position for receiving the product (B position) and stops there until the work station for supplying and placing/filling the product (B) concludes its task;
   - Once the fourth telescopic sub-assembly (2.1) is in the empty container feeding position (A4 position), the fourth telescopic sub-assembly (2.1) moves up the fourth rotating sub-assembly (2.2) while the fourth rotating sub-assembly (2.2) rotates to be positioned transversally to the machine. At this position, this fourth rotating sub-assembly (2.2) is fed with empty containers and the grippers (2.2.4) close, thus preventing said containers from potential movement.
   - The fifth telescopic sub-assembly (2.1) moves below the first, second, third and fourth telescopic sub-assemblies (2.1) until the fifth telescopic sub-assembly (2.1) reaches the empty containers feeding position (A5 position).
Sixth movement:
   - Once the work station for supplying and placing accessories of the product (C) has concluded its task on the containers of the second telescopic sub-assembly (2.1), said second telescopic sub-assembly (2.1) moves to the container evacuation position (D2 position). Once the evacuation of containers is concluded, the second rotating sub-assembly (2.2) is positioned longitudinally to the machine and in its lowered position.
   - The third telescopic sub-assembly (2.1) moves to the position for receiving accessories (C position) and stops there until the work station for supplying and placing accessories of the product (C) concludes its task on the containers of the third telescopic sub-assembly (2.1).
   - The fourth rotating sub-assembly (2.2) has already received the containers and moves to the position for receiving the product (B position) and stops there until the work station for supplying and placing/filling the product (B) fills the containers of the fourth telescopic sub-assembly (2.1).
   - The fifth telescopic sub-assembly (2.1) moves up the fifth rotating sub-assembly (2.2) while the fifth rotating sub-assembly (2.2) rotates to be positioned transversally to the machine. At this point, this fifth rotating sub-assembly (2.2) is fed with empty containers and the grippers (2.2.4) close, thus preventing said containers from potential movement.

The next movements of the object are repetitions of the previously described movements. The logic of the transport system is that a telescopic sub-assembly (2.1) always waits until the previous telescopic sub-assembly (2.1) has finished before moving to the following supply work station. It is important to remark at this point that the empty containers feeding position (positions A1, A2, A3, ...) and the container evacuation position (positions D1, D2, D3, ...) are not necessarily the same for all telescopic sub-assemblies (2.1) along the fixed assembly (1), they are independent for each telescopic sub-assembly (2.1), and depending on the final configuration of the machine they may be the same or not.

## Claims

1. - A transport system for transporting containers in a longitudinal direction of packaging machines which comprises:
- a fixed assembly (1), and
- a plurality of mobile assemblies (2), which move along said fixed assembly (1), where each mobile assembly (2) comprises a rotating sub-assembly (2.2), configured to transport the containers onto itself, and a telescopic sub-assembly (2.1), in charge of moving up or down its corresponding rotating sub-assembly (2.2) which rotates on its corresponding telescopic sub-assembly, **characterized in that** the fixed assembly (1) comprises:
- a base (1.2)
- and a plurality of horizontal guiding fixed sub-assemblies (1.1) oriented in the longitudinal direction of the transport system, and **in that** the telescopic sub-assembly (2.1) of each mobile assembly (2) moves forwards and backwards on the related horizontal guiding fixed sub-assembly (1.1).

2. - A transport system according to claim 1, **characterized in that** the telescopic sub-assemblies (2.1) comprise:
- a fixed vertical sub-assembly (2.1.1);
- a mobile vertical sub-assembly (2.1.2);
where the fixed vertical sub-assembly (2.1.1) moves along its horizontal guiding fixed sub-assembly (1.1) and the mobile vertical sub-assembly (2.1.2) in charge of moving up and moving down the related rotating sub-assembly (2.2).

3. - A transport system according to claim 1, **characterized in that** the transport system comprises two or more mobile assemblies (2) and their corresponding horizontal guiding fixed sub-assemblies (1.1).

4. - A transport system according to any previous claim, **characterized in that** the fixed assembly (1) comprises screw shafts (1.1.3) to move the mobile assemblies (2).

5. - A transport system according to any previous claim, 1 to 4, **characterized in that** the fixed assembly (1) comprises pulley-belt assemblies to move the mobile assemblies (2).

6. - A transport system according to any previous claim 1 to 4, **characterized in that** the fixed assembly (1) comprises rack-pinion assemblies to move the mobile assemblies (2).

7. - A transport system according to any previous claim, **characterized in that** each rotating sub-assembly (2.2) comprises housings for the containers and light indicators (2.2.5) in each housing of each container in order to indicate the progress of each container along the packaging work stations.

8. - A transport system according to claim 1, **characterized in that** each rotating sub-assembly (2.2) comprises housings for the containers.

9. - A transport system according to any previous claim 1 to 7, **characterized in that** each rotating sub-assembly (2.2) comprises a gripper system configured to fasten the containers.

10. . A procedure of movement of the mobile assemblies (2) of the transport system for packaging machines according to claim 1, **characterized in that** the procedure of movement of the mobile assemblies (2) comprises the following stages:
- during transport of containers the rotating sub-assemblies (2.2) oriented in the transversal position to the transport system move in a non-continuous manner, and the corresponding telescopic sub-assemblies (2.1) are located in an upper position;
- once the containers are removed from a related rotating sub-assembly (2.2), the rotating sub-assembly (2.2) is re-oriented in longitudinal position to the transport system, and the telescopic sub-assembly (2.1) is moved in a lower position;
- afterwards, the mobile assembly (2) moves to an empty container feeding position (A position).
- once the mobile assembly (2) reaches the empty container feeding position, the rotating sub-assembly (2.2) is re-oriented again to the transversal position, and the telescopic sub-assembly (2.1), is moved in upper position to initiate the procedure again.

## Patentansprüche

1. Transportsystem zum Transportieren von Behältern in einer Längsrichtung von Verpackungsmaschinen, das umfasst:
- eine stationäre Baugruppe (1) sowie
- eine Vielzahl beweglicher Baugruppen (2), die sich entlang der stationären Baugruppe (1) bewegen, wobei jede bewegliche Baugruppe (2) eine rotierende Teilbaugruppe (2.2), die so ausgeführt ist, dass sie die Behälter auf sich transportiert, sowie eine Teleskop-Teilbaugruppe (2.1) umfasst, die dazu dient, ihre entsprechende rotierende Teilbaugruppe (2.2), die auf ihrer entsprechenden Teleskop-Teilbaugruppe rotiert, nach oben oder unten zu bewegen, **dadurch gekennzeichnet, dass** die stationäre Baugruppe (1) umfasst:
- eine Basis (1.2)
- sowie eine Vielzahl stationärer Horizontalführungs-Teilbaugruppen (1.1), die in der Längsrichtung des Transportsystems ausgerichtet sind, und dadurch, dass die Teleskop-Teilbaugruppe (2.1) jeder beweglichen Baugruppe (2) sich auf der zugehörigen stationären Horizontalführungs-Teilbaugruppe (1.1) vorwärts und rückwärts bewegt.

2. Transportsystem nach Anspruch 1, **dadurch gekennzeichnet, dass** die Teleskop-Teilbaugruppen (2.1) umfassen:
- eine stationäre Vertikal-Teilbaugruppe (2.1.1);
- eine bewegliche Vertikal-Teilbaugruppe (2.1.2);
wobei die stationäre Vertikal-Teilbaugruppe (2.1.1) sich entlang ihrer stationären Horizontalführungs-Teilbaugruppe (1.1) und der beweglichen Vertikal-Teilbaugruppe (2.1.2) bewegt, die dazu dient, die zugehörige rotierende Teilbaugruppe (2.2) nach oben und nach unten zu bewegen.

3. Transportsystem nach Anspruch 1, **dadurch gekennzeichnet, dass** das Transportsystem zwei oder mehr bewegliche Baugruppen (2) und ihre entsprechenden stationären Horizontalführungs-Teilbaugruppen (1.1) umfasst.

4. Transportsystem nach einem der vorangehenden Ansprüche, **dadurch gekennzeichnet, dass** die stationäre Baugruppe (1) Gewindespindeln (1.1.3) zum Bewegen der beweglichen Baugruppen (2) umfasst.

5. Transportsystem nach einem der vorangehenden Ansprüche 1 bis 4, **dadurch gekennzeichnet, dass** die stationäre Baugruppe (1) Riemenscheiben-Riemen-Baugruppen zum Bewegen der beweglichen Baugruppen (2) umfasst.

6. Transportsystem nach einem der vorangehenden Ansprüche 1 bis 4, **dadurch gekennzeichnet, dass** die stationäre Baugruppe (1) Zahnstangen-Ritzel-Baugruppen zum Bewegen der beweglichen Baugruppen (2) umfasst.

7. Transportsystem nach einem der vorangehenden Ansprüche, **dadurch gekennzeichnet, dass** jede rotierende Teilbaugruppe (2.2) Gehäuse für die Behälter und Leuchtanzeigen (2.2.5) in jedem Gehäuse jedes Behälters umfasst, um die Fortbewegung jedes Behälters entlang der Verpackungs-Arbeitsstationen anzuzeigen.

8. Transportsystem nach Anspruch 1, **dadurch gekennzeichnet, dass** jede rotierende Teilbaugruppe (2.2) Gehäuse für die Behälter umfasst.

9. Transportsystem nach einem der vorangehenden Ansprüche 1 bis 7, **dadurch gekennzeichnet, dass** jede rotierende Teilbaugruppe (2.2) ein Greifer-System umfasst, das zum Fixieren der Behälter ausgeführt ist.

10. Verfahren für Bewegung der beweglichen Baugruppen (2) des Transportsystems für Verpackungsmaschinen nach Anspruch 1, **dadurch gekennzeichnet, dass** das Verfahren für Bewegung der beweglichen Baugruppen (2) die folgenden Stufen umfasst:
- beim Transport von Behältern bewegen sich die in der Position quer zu dem Transportsystem ausgerichteten rotierenden Teilbaugruppen (2.2) diskontinuierlich und befinden sich die entsprechenden Teleskop-Teilbaugruppen (2.1) in einer oberen Position;
- wenn die Behälter aus einer zugehörigen rotierenden Teilbaugruppe (2.2) entnommen sind, wird die rotierende Teilbaugruppe (2.2) in einer Position längs zu dem Transportsystem neu ausgerichtet und wird die Teleskop-Teilbaugruppe (2.1) an eine tiefer liegende Position bewegt;
- danach bewegt sich die bewegliche Baugruppe (2) an eine Position zum Zuführen leerer Behälter (Position A),
- wenn die bewegliche Baugruppe (2) die Position zum Zuführen leerer Behälter erreicht, wird die rotierende Teilbaugruppe (2.2) wieder in die quer ausgerichtete Position gebracht und wird die Teleskop-Teilbaugruppe (2.1) an die obere Position bewegt, um das Verfahren erneut in Gang zu setzen.

## Revendications

1. Système de transport pour transporter des contenants dans une direction longitudinale des machines d'emballage, qui comprend :
- un ensemble fixe (1), et
- une pluralité d'ensembles mobiles (2) qui se déplacent le long dudit ensemble fixe (1) où chaque ensemble mobile (2) comprend un sous-ensemble rotatif (2.2), configuré pour transporter les contenants sur lui-même, et un sous-ensemble télescopique (2.1), en charge de faire monter et descendre son sous-ensemble rotatif (2.2) correspondant qui tourne sur son sous-ensemble télescopique correspondant, **caractérisé en ce que** l'ensemble fixe (1) comprend :
- une base (1.2),
- et une pluralité de sous-ensembles de guidage fixes horizontaux (1.1) orientés dans la direction longitudinale du système de transport, et **en ce que** le sous-ensemble télescopique (2.1) de chaque ensemble mobile (2) se déplace vers l'avant et vers l'arrière sur le sous-ensemble de guidage fixe horizontal (1.1) relatif.

2. Système de transport selon la revendication 1, **caractérisé en ce que** les sous-ensembles télescopiques (2.1) comprennent :
- un sous-ensemble vertical fixe (2.1.1) ;
- un sous-ensemble vertical mobile (2.1.2) ;
dans lequel le sous-ensemble vertical fixe (2.1.1) se déplace le long de son sous-ensemble de guidage fixe horizontal (1.1) et du sous-ensemble vertical mobile (2.1.2) en charge de faire monter et descendre le sous-ensemble rotatif (2.2) relatif.

3. Système de transport selon la revendication 1, **caractérisé en ce que** le système de transport comprend deux ensembles mobiles ou plus (2) et leurs sous-ensembles de guidage fixes horizontaux (1.1).

4. Système de transport selon l'une quelconque des revendications précédentes, **caractérisé en ce que** l'ensemble fixe (1) comprend des arbres à vis (1.1.3) pour déplacer les ensembles mobiles (2).

5. Système de transport selon l'une quelconque des revendications 1 à 4, **caractérisé en ce que** l'ensemble fixe (1) comprend des ensembles à poulie-courroie pour déplacer les ensembles mobiles (2).

6. Système de transport selon l'une quelconque des revendications 1 à 4, **caractérisé en ce que** l'ensemble fixe (1) comprend des ensembles à pignon-crémaillère pour déplacer les ensembles mobiles (2).

7. Système de transport selon l'une quelconque des revendications précédentes, **caractérisé en ce que** chaque sous-ensemble rotatif (2.2) comprend des logements pour les contenants et des indicateurs lumineux (2.2.5) dans chaque logement de chaque contenant afin d'indiquer la progression de chaque contenant le long des stations d'emballage.

8. Système de transport selon la revendication 1, **caractérisé en ce que** chaque sous-ensemble rotatif (2.2) comprend des logements pour les contenants.

9. Système de transport selon l'une quelconque des revendications 1 à 7, **caractérisé en ce que** chaque sous-ensemble rotatif (2.2) comprend un système de pince configuré pour fixer les contenants.

10. Procédure de déplacement des ensembles mobiles (2) du système de transport pour des machines d'emballage selon la revendication 1, **caractérisé en ce que** la procédure de déplacement des ensembles mobiles (2) comprend les étapes suivantes :
- pendant le transport des contenants, les sous-ensembles rotatifs (2.2) orientés dans la position transversale par rapport au système de transport se déplacent d'une manière non continue, et les sous-ensembles télescopiques (2.1) correspondants sont positionnés dans une position supérieure ;
- une fois que les contenants ont été retirés d'un sous-ensemble rotatif (2.2) relatif, le sous-ensemble rotatif (2.2) est réorienté dans la position longitudinale par rapport au système de transport, et le sous-ensemble télescopique (2.1) est déplacé dans une position inférieure ;
- après quoi, l'ensemble mobile (2) se déplace vers une position d'alimentation en contenant vide (position A),
- une fois que l'ensemble mobile (2) a atteint la position d'alimentation en contenant vide, le sous-ensemble rotatif (2.2) est réorienté à nouveau dans la position transversale, et le sous-ensemble télescopique (2.1) est déplacé dans la position supérieure pour recommencer la procédure.
